# EUROPEAN PATENT SPECIFICATION

(11) **EP 3 462 712 B1**
(45) Date of publication and mention of the grant of the patent: **01.07.2020**
(21) Application number: 17306311.6
(22) Date of filing: 02.10.2017
(51) Int. Cl.: H04L 29/12, H04L 29/06

(54) **METHOD FOR MITIGATING DNS-DDOS ATTACKS**
VERFAHREN ZUR ABSCHWÄCHUNG VON DNS-DDOS-ANGRIFFEN
PROCÉDÉ POUR ATTÉNUER DES ATTAQUES DNS-DDOS

(43) Date of publication of application: 03.04.2019
(73) Proprietor: Nokia Solutions and Networks Oy, 02610 Espoo (FI)
(72) Inventor: WAISBARD, Erez, 44643 Kfar-Saba (IL); EINZIGER, Gil, 44643 Kfar-Saba (IL)
(74) Representative: Loyer & Abello

(56) References cited:
- US-A1- 2011 035 469
- US-A1- 2013 042 299
- US-A1- 2017 111 389
- US-B1- 9 756 071

## Description

### Field of the invention

The invention relates to the technical field of name-to-address mapping involving directory access protocols using Domain Name System (DNS).

### Background

Domain Name System (DNS) is a hierarchical and decentralized naming system for computers, services or other resources connected to the internet. DNS translates between easily memorable URLs such as (www.nokia.com) to numeric IP addresses such as 168.127.101.14. Such addresses are then used to provide IP level connectivity to any server in the internet. DNS translation is among the first things that happen once a user types a string in his browser and thus an attack on DNS has a potentially widespread impact.

The DNS is a tree data structure. Each node or a leaf in this tree has a label and resource records (RR). Such records hold information that is associated with the domain name and most notably its IP address (or addresses). Domains consist of labels that are separated by dots. The root of the tree has zone with multiple subdomains (e.g. com, net).

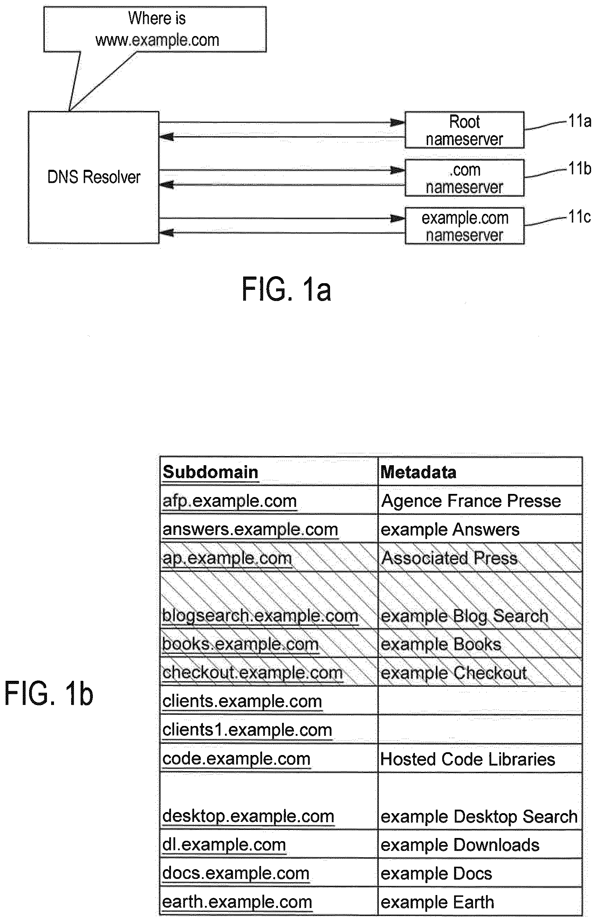

Figure 1a illustrates a DNS resolver 10 that implements the DNS protocol. When a user types the URL www.example.com, the DNS resolver 10 contacts a root nameserver 11a to fetch the resource record of .com, then a ".com" nameserver 11b is accessed to fetch the records of "example.com" and finally, a "example.com" nameserver 11c is accessed to get the IP address of "www. example.com". Clearly, each domain can have multiple subdomains, E.g., com has many subdomains such as google.com, yahoo.com and so forth. Similarly, Google has multiple subdomains such as mail.google.com, drive.google.com and so forth.

Distributed Denial of Service (DDoS) attacks, are a common attack form where many devices send traffic to an attacked server. Since servers have a limited amount of resources, such a spike in ingress traffic eventually causes such servers to run out of resources and malfunction.

A naïve DDoS attack would have an entire botnet send traffic to an existing website. E.g., "www.example.com". If the DNS did not have caches, then each request would cause a recursive DNS query until the system gets saturated. Such system saturation is the goal of DDoS attacks. For each recursive query, DNS servers 11a, 11b, 11c must maintain state so that they can return the query results. The state is maintained until the recursive query is completed. If the system is saturated, then query completion times are very slow and eventually the server runs out of memory.

However, to improve performance, DNS servers 11a, 11b, 11c often employs caches which contain the mappings for frequently requested URLs. This means if it receives another request for the URL, it can reply without needing to ask any other servers, until that cache expires. Under normal circumstances, most of the common URLs are already cached and the recursive DNS query illustrated above happens relatively infrequently, when a user requests a URL which is not cached. Therefore, the existence of DNS caches would counteract a naïve DDoS attack. In the previous example, if all attackers targeted "www.example.com", a DNS server would counteract the attack by caching the IP of this URL and avoid the recursive query altogether.

A more sophisticated DDoS attack would be to focus on non-existent URLS. For example, an attacker could request: "fake1.example.com", "fake2.example.com", "fake3.example.com" and so forth. The number of invalid URLS being infinite, even though caches can cache invalid URLs no amount of finite caching space is enough with current algorithms. A URL that was never requested before will always initiate a recursive query.

Specifically, the Dyn attack used this specific trick. Dyn's servers were bombarded with URLs to non-existing subdomains of very popular sites. Each such resolution request forced Dyn's servers to perform a recursive DNS lookup until their DNS servers were saturated. As a result, access was prevented for several hours to many popular and important websites such as banks and social networks. Moreover, a side effect of the attack was that many of these non-existent URLs were cached at the expense of popular URLs. This caused legitimate traffic to generate a larger number of recursive DNS queries as well.

A fundamental technique to mitigate DDoS attacks is to ignore some of the resolution requests. Therefore, existing techniques attempt to separate the legitimate traffic from the malicious one. Given such separation, a possible mitigation is to ignore all the malicious packets. In the Dyn attack however, the attacked URLs were very popular and blocking queries for these URLs also blocks many legitimate users. Thus, mitigating the attack by blocking requests leaves the majority of popular and important sites unavailable. Patent Application US 2011/0035469 A1 discloses a method and a system for filtering of network traffic.

### Summary

The invention is defined by the appended claims.

Embodiments of the invention provide a method of mitigating DNS DDoS attacks, such as the Dyn attack, by discarding DNS resolution requests for non-existent URLs. There is an infinite number of non-existent URLs and thus caching the results of such URLs is insufficient to mitigate a DDoS attack. Specifically, current caching speeds up the average case where legitimate users mistakenly type the wrong URL but do not help against sophisticated attackers that randomly generate non-existent URLs. However, there is only a finite number of existent domain names and if the DNS resolver caches all the existent domain names, then it can discard an infinite number of different resolution requests for non-existent URLs without imitating a recursive query.

The invention provides a method for treating a DNS resolution request, the method including:
- storing, in a cache memory of a DNS resolver, a domain name database storing at least one continuous listing of domain names, a continuous listing of domain names including every existent domain name included, in a linear order, between a first endpoint domain name and a second endpoint domain name,
- receiving a DNS resolution request, the DNS resolution request identifying a domain name;
- if the domain name identified in the DNS resolution request is included, in the linear order, between the first endpoint domain name and the second endpoint domain name of one of the continuous listing of domain names stored in the domain name database, searching the domain name database in order to determine whether the domain name identified in the DNS resolution request matches a corresponding domain name in the domain name database; and
- initiating a DNS query for the DNS resolution request only if the domain name identified in the DNS resolution request matches a corresponding domain name in the domain name database.

If the domain name identified in the DNS resolution request is included, in the linear order, between the first endpoint domain name and the second endpoint domain name of one of the continuous listing of domain names stored in the domain name database, it means that, if the domain name identified in the DNS resolution request was existent, it should be stored in the domain name database. It also means that, if the domain name identified in the DNS resolution request is not stored in the domain name database, the domain name identified in the DNS resolution request is non-existent. The DNS resolver can therefore determine if a domain name is non-existent before performing a DNS query. As a consequence, the DNS resolver is able to avoid performing a DNS query for non-existent domain names.

In embodiments, the method for treating a DNS resolution request includes initiating no DNS query, if the domain name identified in the DNS resolution request is not included, in the linear order, between the first endpoint domain name and the second endpoint domain name of one of the continuous listing of domain names.

Domains not included in the one of the continuous listing of domain names included in the domain name database (called the peripheral domains) are still be vulnerable to DDoS attacks. However, discarding all resolution requests identifying peripheral domains in case of a DDoS attack would mitigate the potential impact of the attack and reduces the incentive to perform such an attack.

In embodiments, the linear order is a lexicographical order.

In embodiments, the domain name database is obtained by extracting domain names from resource records.

In embodiments, the at least one continuous listing of domain names is compressed using a fingerprint encoding scheme.

In embodiments, the fingerprint encoding scheme is a Bloom filter.

In embodiments, the fingerprint encoding scheme is a compact hash table.

In embodiments, the DNS query initiated is a recursive DNS query.

The invention also provides a DNS resolver including a cache memory storing a domain name database storing at least one continuous listing of domain names, a continuous listing of domain names including every existent domain name included, in a linear order, between a first endpoint domain name and a second endpoint domain name,
the DNS resolver being configured for:
- receiving a DNS resolution request, the DNS resolution request identifying a domain name;
- if the domain name identified in the DNS resolution request is included, in the linear order, between the first endpoint domain name and the second endpoint domain name of one of the continuous listing of domain names stored in the domain name database, searching the domain name database in order to determine whether the domain name identified in the DNS resolution request matches a corresponding domain name in the domain name database;
- initiating a DNS query for the DNS resolution request only if the domain name identified in the DNS resolution request matches a corresponding domain name in the domain name database.

The invention also provides a computer program comprising executable code that causes a computer to perform all the steps of a method as described above when executed.

### Brief description of the drawings

These and other aspects of the invention will be apparent from and elucidated with reference to the embodiments described hereinafter, by way of example, with reference to the drawings.
Figure 1a illustrates the DNS protocol according to the prior art.
Figure 1b illustrates a DNS zone file of a domain.
Figure 2a illustrates a method for treating a DNS resolution request according to an embodiment of the invention when the domain name identified in the DSN resolution request is existent.
Figure 2b illustrates a method for treating a DNS resolution request according to an embodiment of the invention when the domain name identified in the DSN resolution request is non-existent.
Figure 3 illustrates a method for treating a DNS resolution request according to another embodiment of the invention.
Figure 4 illustrates how the DNS resolver compresses the continuous listings of domain names using a Bloom filter with two hash function according to some embodiments of the invention.
Figure 5 illustrates how the DNS resolver tests whether the domain name identified in the DNS query is included in the set formed by the continuous listing of domain names using a Bloom filter according to some embodiments of the invention.

### Detailed description of the embodiments

The Domain Name System (DNS) consists of a tree data structure. The tree sub-divides into DNS zones beginning at the root zone. Each node or leaf in the tree has a label and may have Resource Records (RR). RRs hold basic information elements of the domain name and most notably its IP address. Figure 1b is a DNS zone file of the domain "example.com" that contains mappings between domain names and metadata (typically IP addresses) organized in the form of text representations of RRs. The domain name itself consists of the label, possibly concatenated with the name of its parent node on the right, separated by a dot. The right-most label conveys the top-level domain; for example, the domain name www.example.com belongs to the top-level domain com. The hierarchy of domains descends from right to left; each label to the left specifies a subdomain of the domain to the right. For example: the label example specifies a subdomain of the com domain, and www is a subdomain of example.com.

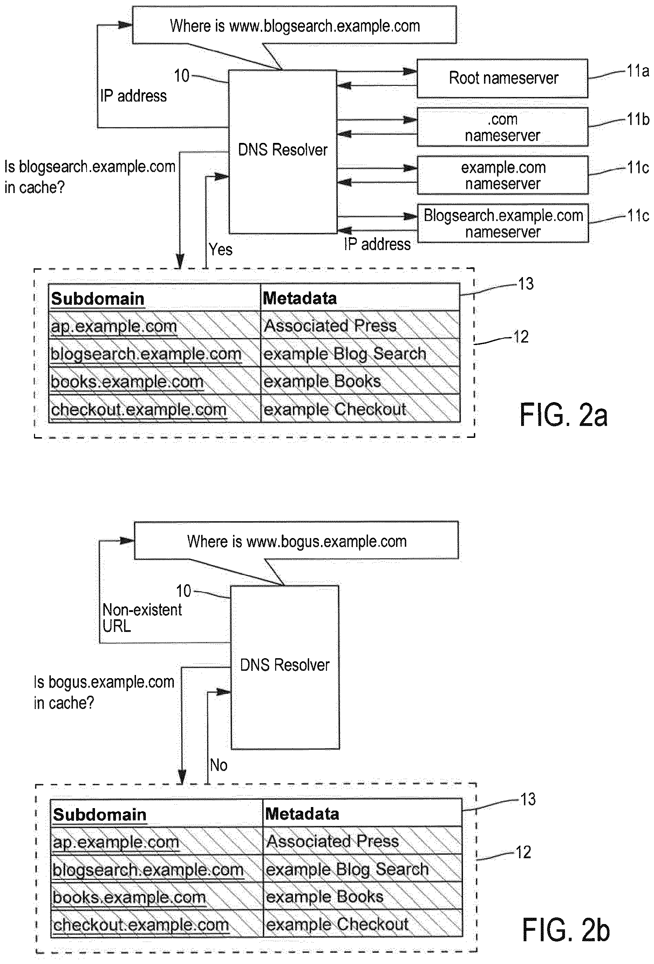

As illustrated by figure 2a, the DNS is maintained by a distributed database system. The nodes of this database are DNS servers 11a, 11b, 11c. Each domain has at least one authoritative DNS server that publishes information about that domain and the name servers of any domains subordinate to it.

When a user makes a resolution request that requires a domain name lookup, it sends a DNS resolution request to a DNS resolver 10. Users may communicate with a DNS resolver 10 directly or through applications such as web browsers, e-mail clients, and other Internet applications.

The DNS resolver 10 is configured with a memory cache 12 storing a domain name database 13 listing existing domain names. The domain name database 13 includes continuous listings of domain names. A continuous listing of domain names is a continues and linearly ordered listing of domain names including every existent domain name included, in a linear order, between a first endpoint domain name and a second endpoint domain name. A continuous listings of domain names may in particular be a listing of subdomain names, a subdomain being a domain that is part of a larger domain.

A linear order is a binary relation on some set, which is total. That means that any pair of elements in the set of the relation are comparable under the relation. This also means that the set can be diagrammed as a line of elements. The linear order may in particular be the lexicological order. The lexicographical order is a generalization of the way the alphabetical order of words is based on the alphabetical order of their component letters.

For example, the domain name database 13 may store all the ".com" domain names whose URL starts with "b". Doing so allow to satisfy queries for all nonexistent URLs of the form b*.example.com where * is a wildcard that replaces an arbitrary string.

In the example illustrated by figures 2a and 2b, the domain name database 13 includes all the existent domain names included in lexicographical order between ap.example.com and checkout.example.com.

When the DNS resolver 10 receives a DNS resolution request for a URL, the DNS resolver 10 first checks whether the domain name identified in the DNS resolution request is included, in the linear order, between the first endpoint domain name and the second endpoint domain name of one of the continuous listing of domain names stored in the domain name database 13.

In the example illustrated by figures 2a and 2b, since the domain name database 13 includes only one continuous listing of domain names, namely, the one including all the existing domain names included, in lexicographical order, between ap.example.com and checkout.example.com, the DNS resolver 10 checks whether the domain name identified in the DNS resolution request is included, in lexicographical order, between ap.example.com and checkout.example.com.

The DNS resolver 10 searches in the domain names database 13 a domain name matching the domain name identified in the DNS resolution request. To that end the DNS resolver may use any search algorithm know in the art, such as linear search algorithms, or binary search algorithms.

If the domain name is stored in the domain name database 13 then it means that it is existent, and the DNS resolver 10 initiates a DNS query that ultimately lead to a full resolution of the domain name into an IP address. The DNS query may be either non-recursive, recursive, or iterative, or a combination of these. In the recursive query approach, the DNS resolver 10 will query a single DNS server 11a, which may then query other DNS servers 11b, 11c on behalf of the requester. In typical operation, a client will issue a recursive query to a caching recursive DNS server, which will then issue non-recursive queries to determine the answer and send a single answer back to the client. In the iterative query procedure, a DNS resolver 10 will query a chain of one or more DNS servers. Each server will refer the client to the next server in the chain, until the current server can fully resolve the request.

If, on the contrary, the domain name identified in the DNS resolution request is included, in the linear order, between the first endpoint domain name and the second endpoint domain name of one of the continuous listing of domain names stored in the domain name database 13, it means that, if the domain name identified in the DNS resolution request exists, it should be stored in the domain name database 13. It therefore also means that, if the domain name identified in the DNS resolution request is not stored in the domain name database 13, it is not existent and the DNS resolver can discard the resolution request without initiating a DNS query.

In the example illustrated by figure 2b, the domain name identified in the DNS resolution request is "blogsearch.example.com". Since "blogsearch.example.com" is included, in lexicographical order, between "ap.example.com" and "checkout.example.com", the DNS resolver 10 searches in the domain names database 13 a domain name matching "blogsearch.example.com". Since "blogsearch.example.com" is stored in the domain names database 13, the DNS resolver 10 perform a DNS query for "blogsearch.example.com" and respond to the end user's operating system with an IP address.

In the example illustrated by figure 2a, the domain name identified in the DNS resolution request is "bogus.example.com". Since "bogus.example.com" is included, in lexicographical order, between ap.example.com and checkout.example.com, the DNS resolver 10 searches in the domain names database 13 a domain name matching "bogus.example.com". Since "bogus.example.com" is not stored in the domain names database 13, the DNS resolver 10 does not perform a DNS query for "www.bogus.example.com" and respond to the end user's operating system with an error message.

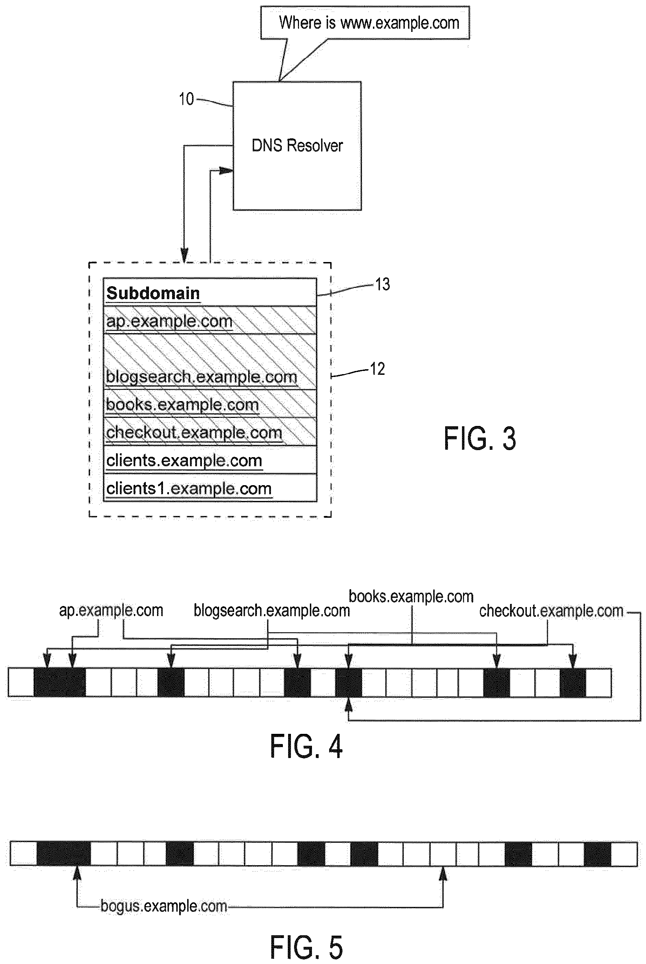

In the example illustrated by figure 3, the domain name database 13 only stores the domain names. In particular, the domain name database 13 does not store the metadata fields including the IP addresses of the domains. This reduces the space consumption and therefore increase the amount of records that can be stored. The domain name database 13 may obtained by compressing RRs of DNS zone files by extracting the domain names and eliminating all the metadata in the extracted RRs and leaving only the domain names. The required space to store the domain name database 13 may be reduced by eliminating all the metadata in the RRs.

The continuous listings of domain names may be further compressed at the expense of a minor probability of error. The domain name database 13 may indeed store a fingerprint of each domain name instead of the domain name itself by using fingerprint encoding schemes such as Bloom filters, or compact hash tables. Doing so considerably reduces the space requirement, at the expense of a small false positive probability that the DNS resolver 10 wrongly considers a non-existent domain name to exist and initiate a DNS query for it. However, in the context of DDoS mitigation, such probability is acceptable.

In the example illustrated by figure 4, the continuous listings of domain names are compressed using a Bloom filter with two hash function. Each domain name in a continuous listing of domain names is hashed with k (in the illustrated example k=2) functions whose image is a bit in the range of the filter. Bits with domain names hashed to them are set and bits with no domain names hashed to them are unset.

The DNS resolver 10 checks whether or not the domain name identified in the DNS query is included in the set formed by the continuous listing of domain names using the Bloom filter. As illustrated by Figure 5, the Bloom filter feed the domain name to each of the k hash functions to get k array positions. If any of the bits at these positions is 0, the domain name is definitely not in the continuous listing and therefore non-existent. If it were, then all the bits would have been set to 1 when it was inserted. If all are 1, then either the domain name is in the listing, or the bits have by chance been set to 1 during the insertion of other domain names, resulting in a false positive. If the Bloom filter is configured properly the probability of a false positive is small. Therefore, the DNS resolver 10 still avoids recursive DNS queries for most non-existent domain names.

If the domain name identified in the DNS resolution request is not included, in the linear order, between the first endpoint domain name and the second endpoint domain name of one of the continuous listing of domain names stored in the domain name database 13, it does not mean that the domain name identified in the DNS resolution request does not exists but it means that the DNS resolver cannot be certain that it does exist. Domain names that are not stored in the domain name database 13 would therefore still be vulnerable to DDoS.

DNS service provider may choose to store in the domain name database 13 listings of high priority domains (popular and important sites) in order to guarantee that they will remain available in case of a DDoS attack. Low priority domains (peripheral domains) not stored in the domain name database 13 would however still be vulnerable to DDoS. However, discarding all resolution requests identifying peripheral domains in case of a DDoS attack would mitigate the potential impact of the attack and reduces the incentive to perform such an attack. The DNS resolver 10 would initiate no DNS query for the DNS resolution request, if the domain name identified in the DNS resolution request is not included, in the linear order, between the first endpoint domain name and the second endpoint domain name of one of the continuous listing of domain names. Doing so prevents damage to high priority domains and limits the denial of service only to lower priority peripheral domains.

In the Dyn example, popular sites like twitter, CNN and important sites such as banks could have been protected with the present invention. Dyn would still allow queries to these sites and ignore all other instead of having its servers crush. Therefore, the present invention makes it more difficult to target the most important Internet services and ensures their accessibility even in the presence of modern DNS attacks.

Elements such as the DNS resolver 10 could each be or include e.g. hardware means like e.g. an ASIC, or a combination of hardware and software means, e.g. an ASIC and an FPGA, or at least one microprocessor and at least one memory with software modules located therein.

The invention is not limited to the described embodiments but only by the appended claims.

The use of the verb "to comprise", "to include" or "to contain" and their conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. Method for treating a DNS resolution request, the method including:
- storing, in a cache memory (12) of a DNS resolver (10), a domain name database (13) storing at least one continuous listing of domain names, a continuous listing of domain names including every existent domain name included, in a linear order, between a first endpoint domain name and a second endpoint domain name,
- receiving a DNS resolution request, the DNS resolution request identifying a domain name;
- if the domain name identified in the DNS resolution request is included, in the linear order, between the first endpoint domain name and the second endpoint domain name of one of the continuous listing of domain names stored in the domain name database (13), searching the domain name database (13) in order to determine whether the domain name identified in the DNS resolution request matches a corresponding domain name in the domain name database (13); and
- initiating a DNS query for the DNS resolution request only if the domain name identified in the DNS resolution request matches a corresponding domain name in the domain name database (13).

2. Method for treating a DNS resolution request, according to claim 1, including initiating no DNS query, if the domain name identified in the DNS resolution request is not included, in the linear order, between the first endpoint domain name and the second endpoint domain name of one of the continuous listing of domain names.

3. Method for treating a DNS resolution request, according to claim 1 or 2, wherein the linear order is a lexicographical order.

4. Method for treating a DNS resolution request, according to claim 1 or 2, wherein the domain name database (13) is obtained by extracting domain names from resource records.

5. Method for treating a DNS resolution request, according to claim 1 or 2, wherein the at least one continuous listing of domain names is compressed using a fingerprint encoding scheme.

6. Method for treating a DNS resolution request, according to claim 5, wherein the fingerprint encoding scheme is a Bloom filter.

7. Method for treating a DNS resolution request, according to claim 5, wherein the fingerprint encoding scheme is a compact hash table.

8. Method for treating a DNS resolution request, according to claim 1 or 2, wherein the DNS query initiated is a recursive DNS query.

9. DNS resolver (10) including a cache memory (12) storing a domain name database (13) storing at least one continuous listing of domain names, a continuous listing of domain names including every existent domain name included, in a linear order, between a first endpoint domain name and a second endpoint domain name, the DNS resolver (10) being configured for:
- receiving a DNS resolution request, the DNS resolution request identifying a domain name;
- if the domain name identified in the DNS resolution request is included, in the linear order, between the first endpoint domain name and the second endpoint domain name of one of the continuous listing of domain names stored in the domain name database (13), searching the domain name database (13) in order to determine whether the domain name identified in the DNS resolution request matches a corresponding domain name in the domain name database (13);
- initiating a DNS query for the DNS resolution request only if the domain name identified in the DNS resolution request matches a corresponding domain name in the domain name database (13).

10. A computer program comprising executable code that causes a computer to perform all the steps of a method in accordance with any one of claims 1 to 8 when executed.

## Patentansprüche

1. Verfahren zum Bearbeiten einer DNS-Auflösungsanforderung, wobei das Verfahren enthält:
- Speichern in einem Cache-Speicher (12) eines DNS-Auflösers (10) einer Domänennamen-Datenbank (13), die zumindest eine durchgängige Auflistung von Domänennamen speichert, wobei eine durchgängige Auflistung von Domänennamen jeden vorhandenen Domänennamen enthält, der in einer linearen Reihenfolge zwischen einem ersten Endpunktdomänennamen und einem zweiten Endpunktdomänennamen enthalten ist,
- Empfangen einer DNS-Auflösungsanforderung, wobei die DNS-Auflösungsanforderung einen Domänennamen identifiziert;
enthalten ist,
- dann, wenn der in der DNS-Auflösungsanforderung identifizierte Domänenname in der linearen Reihenfolge zwischen dem ersten Endpunktdomänennamen und dem zweiten Endpunktdomänennamen einer der durchgängigen Auflistungen von Domänennamen, die in der Domänennamen-Datenbank (13) gespeichert sind, enthalten ist, Durchsuchen der Domänennamen-Datenbank (13), um zu bestimmen, ob der in der DNS-Auflösungsanforderung identifizierte Domänenname mit einem entsprechenden Domänennamen in der Domänennamen-Datenbank (13) übereinstimmt; und
- Einleiten einer DNS-Abfrage für die DNS-Auflösungsanforderung nur dann, wenn der in der DNS-Auflösungsanforderung identifizierte Domänenname mit einem entsprechenden Domänennamen in der Domänennamen-Datenbank (13) übereinstimmt.

2. Verfahren zum Bearbeiten einer DNS-Auflösungsanforderung nach Anspruch 1, das umfasst, keine DNS-Abfrage einzuleiten, wenn der in der DNS-Auflösungsanforderung identifizierte Domänenname nicht in der linearen Reihenfolge zwischen dem ersten Endpunktdomänennamen und dem zweiten Endpunktdomänennamen einer der durchgängigen Auflistungen von Domänennamen enthalten ist.

3. Verfahren zum Bearbeiten einer DNS-Auflösungsanforderung nach Anspruch 1 oder 2, wobei die lineare Reihenfolge eine lexikografische Reihenfolge ist.

4. Verfahren zum Bearbeiten einer DNS-Auflösungsanforderung nach Anspruch 1 oder 2, wobei die Domänennamen-Datenbank (13) durch Extrahieren von Domänenamen von Betriebsmittelaufzeichnungen erhalten wird.

5. Verfahren zum Bearbeiten einer DNS-Auflösungsanforderung nach Anspruch 1 oder 2, wobei die mindestens eine durchgängige Auflistung von Domänennamen unter Verwendung eines Fingerabdruckcodierschemas komprimiert ist.

6. Verfahren zum Bearbeiten einer DNS-Auflösungsanforderung nach Anspruch 5, wobei das Fingerabdruckcodierschema ein Bloom-Filter ist.

7. Verfahren zum Bearbeiten einer DNS-Auflösungsanforderung nach Anspruch 5, wobei das Fingerabdruckcodierschema eine kompakte Hash-Tabelle ist.

8. Verfahren zum Bearbeiten einer DNS-Auflösungsanforderung nach Anspruch 1 oder 2, wobei die eingeleitete DNS-Abfrage eine rekursive DNS-Abfrage ist.

9. DNS-Auflöser (10), der einen Cache-Speicher (12) enthält, der eine Domänennamen-Datenbank (13) speichert, die zumindest eine durchgängige Auflistung von Domänennamen speichert, wobei eine durchgängige Auflistung von Domänennamen jeden vorhandenen Domänennamen enthält, der in einer linearen Reihenfolge zwischen einem ersten Endpunktdomänennamen und einem zweiten Endpunktdomänennamen enthalten ist, wobei der DNS-Auflöser (10) konfiguriert ist zum:
- Empfangen einer DNS-Auflösungsanforderung, wobei die DNS-Auflösungsanforderung einen Domänennamen identifiziert;
- dann, wenn der in der DNS-Auflösungsanforderung identifizierte Domänenname in der linearen Reihenfolge zwischen dem ersten Endpunktdomänennamen und dem zweiten Endpunktdomänennamen einer der durchgängigen Auflistungen von Domänennamen, die in der Domänennamen-Datenbank (13) gespeichert sind, enthalten ist, Durchsuchen der Domänennamen-Datenbank (13), um zu bestimmen, ob der in der DNS-Auflösungsanforderung identifizierte Domänenname mit einem entsprechenden Domänennamen in der Domänennamen-Datenbank (13) übereinstimmt;
- Einleiten einer DNS-Abfrage für die DNS-Auflösungsanforderung nur dann, wenn der in der DNS-Auflösungsanforderung identifizierte Domänenname mit einem entsprechenden Domänennamen in der Domänennamen-Datenbank (13) übereinstimmt.

10. Computerprogramm, das ausführbaren Code umfasst, der bewirkt, dass ein Computer alle Schritte eines Verfahrens in Übereinstimmung mit einem der Ansprüche 1 bis 8 ausführt, wenn es ausgeführt wird.

## Revendications

1. Procédé de traitement d'une demande de résolution de DNS, le procédé comportant :
- la mémorisation, dans une mémoire cache (12) d'un résolveur de DNS (10), d'une base de données de noms de domaines (13) mémorisant au moins une liste continue de noms de domaines, une liste continue de noms de domaines comportant tous les noms de domaines existants inclus, dans un ordre linéaire, entre un premier nom de domaine de point d'accès et un second nom de domaine de point d'accès,
- la réception d'une demande de résolution de DNS, la demande de résolution de DNS identifiant un nom de domaine ;
- si le nom de domaine identifié dans la demande de résolution de DNS est inclus, dans l'ordre linéaire, entre le premier nom de domaine de point d'accès et le second nom de domaine de point d'accès d'un domaine de la liste continue de noms de domaines mémorisée dans la base de données de noms de domaines (13), l'exploration de la base de données de noms de domaines (13) afin de déterminer que le nom de domaine identifié dans la demande de résolution de DNS correspond ou non à un nom de domaine correspondant dans la base de données de noms de domaines (13) ; et
- le lancement d'une interrogation de DNS pour la demande de résolution de DNS uniquement si le nom de domaine identifié dans la demande de résolution de DNS correspond à un nom de domaine correspondant dans la base de données de noms de domaines (13).

2. Procédé de traitement d'une demande de résolution de DNS selon la revendication 1, comportant le non-lancement d'une interrogation de DNS, si le nom de domaine identifié dans la demande de résolution de DNS n'est pas inclus, dans l'ordre linéaire, entre le premier nom de domaine de point d'accès et le second nom de domaine de point d'accès d'un nom de la liste continue de noms de domaines.

3. Procédé de traitement d'une demande de résolution de DNS, selon la revendication 1 ou 2, dans lequel l'ordre linéaire est un ordre lexicographique.

4. Procédé de traitement d'une demande de résolution de DNS, selon la revendication 1 ou 2, dans lequel la base de données de noms de domaine (13) est obtenue en extrayant des noms de domaines d'enregistrement de ressources.

5. Procédé de traitement d'une demande de résolution de DNS, selon la revendication 1 ou 2, dans lequel l'au moins une liste continue de noms de domaines est compressée à l'aide d'un mécanisme de codage d'empreintes.

6. Procédé de traitement d'une demande de résolution de DNS, selon la revendication 5, dans lequel le mécanisme de codage d'empreintes est un filtre de Bloom.

7. Procédé de traitement d'une demande de résolution de DNS, selon la revendication 5, dans lequel le mécanisme de codage d'empreintes est une table de hachage compacte.

8. Procédé de traitement d'une demande de résolution de DNS, selon la revendication 1 ou 2, dans lequel l'interrogation de DNS lancée est une interrogation de DNS récursive.

9. Résolveur de DNS (10) comportant une mémoire cache (12) qui mémorise une base de données de noms de domaines (13) mémorisant au moins une liste continue de noms de domaines, une liste continue de noms de domaines comportant tous les noms de domaines existants inclus, dans un ordre linéaire, entre un premier nom de domaine de point d'accès et un second nom de domaine de point d'accès, le résolveur de DNS (10) étant configuré pour :
- recevoir une demande de résolution de DNS, la demande de résolution de DNS identifiant un nom de domaine ;
- si le nom de domaine identifié dans la demande de résolution de DNS est inclus, dans l'ordre linéaire, entre le premier nom de domaine de point d'accès et le second nom de domaine de point d'accès d'un domaine de la liste continue de noms de domaines mémorisée dans la base de données de noms de domaines (13), explorer la base de données de noms de domaines (13) afin de déterminer que le nom de domaine identifié dans la demande de résolution de DNS correspond ou non à un nom de domaine correspondant dans la base de données de noms de domaines (13) ;
- lancer une interrogation de DNS pour la demande de résolution de DNS uniquement si le nom de domaine identifié dans la demande de résolution de DNS correspond à un nom de domaine correspondant dans la base de données de noms de domaines (13).

10. Programme informatique comprenant un code exécutable qui amène un ordinateur à réaliser toutes les étapes d'un procédé selon l'une quelconque des revendications 1 à 8 à son exécution.
